# FASCICULE DE BREVET EUROPEEN

(11) **EP 0 961 970 B1**
(45) Date de publication et mention de la délivrance du brevet: **24.04.2002**
(21) Numéro de dépôt: 98910800.6
(22) Date de dépôt: 20.02.1998
(51) Int. Cl.: G06F 9/46

(54) **PROCEDE ET DISPOSITIF POUR L'EXECUTION PAR UN PROCESSEUR UNIQUE DE PLUSIEURS FONCTIONS DE NIVEAUX DE CRITICITE DIFFERENTS, AVEC UNE GRANDE SECURITE DE FONCTIONNEMENT**
VERFAHREN UND VORRICHTUNG ZUR SICHEREN AUSFÜHRUNG VON EINER MEHRZAHL VONFUNKTIONEN MIT VERSCHIEDENEN PRIORITÄTEN, DURCH EINEN PROZESSOR.
METHOD AND DEVICE FOR EXECUTING BY A SINGLE PROCESSOR SEVERAL FUNCTIONS OF DIFFERENT CRITICALITY LEVELS, OPERATING WITH HIGH SECURITY

(30) Priorité: 25.02.1997 FR 9702212
(43) Date de publication de la demande: 08.12.1999
(73) Titulaire: THALES AVIONICS S.A., 78141 Vélizy Villacoublay Cédex (FR)
(72) Inventeur: COLAS, Gérard, F-94117 Arcueil Cedex ex dex ex (FR); LE BORGNE, Olivier, F-94117 Arcueil Ce7 Arcueil Ceddex (FR); VILLARD, Robert, F-94117 Arcueil Cedex cueil Cedex (FR)
(74) Mandataire: Beylot, Jacques
(86) Numéro de dépôt international: FR9800337
(87) Numéro de publication internationale: WO9838572

(56) Documents cités:
- EP-A- 0 415 515
- POLLACK F ET AL: "AN OBJECT-ORIENTED DISTRIBUTED OPERATING SYSTEM" COMPUTER SOCIETY INTERNATIONAL CONFERENCE (COMPCON), SPRING MEETING, LOS ALAMITOS, FEB. 26 - MAR. 2, 1990, no. CONF. 35, 26 février 1990, INSTITUTE OF ELECTRICAL AND ELECTRONICS ENGINEERS, pages 143-152, XP000146177

## Description

La présente invention concerne un procédé et un dispositif permettant l'exécution par un processeur unique de plusieurs fonctions de pilotage d'un processus industriel, certaines de ces fonctions nécessitant un niveau élevé de sécurité de fonctionnement.

Elle s'applique notamment, mais non exclusivement, aux calculateurs embarqués à bord des aérodynes qui assurent différentes fonctions de conduite de vol. Il s'avère que les développements en cours de ces équipements visent à automatiser de plus en plus les tâches de conduite de vol, et en particulier, le pilotage des aérodynes. Cette tendance conduit à des équipements de plus en plus complexes, encombrants, consommateurs d'énergie, coûteux, et difficiles à maintenir.

Pour résoudre ce problème, on a cherché à intégrer et à rendre modulaires ces équipements. Pour cela, on a déjà proposé une architecture qui rassemble différents modules électroniques dans des baies ou des armoires électroniques, ces modules effectuant l'acquisition des informations issues des capteurs et des autres équipements embarqués, ainsi que l'élaboration de commandes de vol.

On a par ailleurs tenté de regrouper plusieurs fonctions comprenant plusieurs tâches exécutées de manière cyclique, au sein d'un même module, les calculs et traitements nécessaires pouvant être effectués au moyen d'un même processeur utilisé en temps partagé.

Or, dans les équipements embarqués à bord des aérodynes, on associe généralement un niveau de criticité à chaque fonction réalisée, et à chaque donnée utilisée par les fonctions, chaque niveau de criticité correspondant à un taux de panne maximum requis par les autorités de certification des équipements aéronautiques. Ainsi, les fonctions de niveau le plus critique correspondent à celles dont la défaillance peut avoir des conséquences catastrophiques. Ces fonctions doivent donc présenter une très faible probabilité de défaillance (inférieure à 10⁻⁹ panne par heure de vol). De même, les données les plus critiques sont les données qui, si elles ne sont plus disponibles ou erronées, peuvent entraîner des événements catastrophiques.
Bien entendu, la criticité des données n'est pas en relation avec la criticité des fonctions qui les utilisent, une même donnée pouvant être utilisée par plusieurs fonctions de niveaux de criticité différents.

Le partage d'un même processeur par plusieurs fonctions implique donc que des tâches de niveaux de criticité différents sont exécutées par le même processeur, ce qui accroît d'une manière importante le risque que des fonctions moins critiques, comme les fonctions liées à la maintenance des équipements, perturbent, voire bloquent l'exécution des fonctions les plus critiques. Il est alors nécessaire de prendre des dispositions particulières pour que les fonctions réalisées, et en particulier les plus critiques, soient exécutées avec un niveau de sécurité requis par les autorités de certification des équipements embarqués.

A cet effet, on a proposé des architectures redondantes, où tous les modules, en particulier ceux qui assurent des fonctions critiques, sont triplés de manière à ce que les fonctions critiques puissent être réalisées même à la suite d'une défaillance. Cependant, cette solution présente peu d'intérêt dans une optique de réduction des coûts, du nombre de modules nécessaires, de la puissance consommée et dissipée, de la disponibilité (taux de pannes) et des facilités de maintenance des équipements.

En outre, la solution de l'architecture redondante revient à dupliquer non seulement des fonctions critiques, mais aussi des fonctions non critiques, comme les fonctions de maintenance.

Pour résoudre ce problème, on a aussi proposé, dans la demande européenne de brevet EP 0 415 515, un calculateur pour l'exécution de tâches en temps réel utilisant un processeur central associé à un circuit de planification cadencé par une horloge temps réel et appelé par un système d'interruptions, qui interdit au processeur central les accès mémoire ou entrée/sortie non autorisés, c'est-à-dire à des adresses situées en dehors d'une plage prédéfinie d'adresses autorisées pour chaque tâche.
On a également proposé, dans un article de POLLACK F. et al. intitulé" An Object-Oriented Distribued Operating System"Computer Society International Conference (COMPCON), Spring Meeting, LOS ALAMITOS, Feb. 26-Mar. 2, 1990, Institute of Electrical and Electronics Engineers, pages 143-152, XP000146177, un processeur et son système d'exploitation multiutilisateur, multitâche et orienté objet qui affecte aux différentes tâches leurs propres espaces d'adressage.

La présente invention a pour but de permettre le partage d'un processeurs par plusieurs fonctions comprenant des tâches de niveaux de criticité différents, en assurant un niveau de sécurité requis et sans encourir les inconvénients de coût, de consommation et de maintenance liés à une architecture redondante. A cet effet, elle propose un procédé pour l'exécution par un processeur unique de plusieurs fonctions regroupant chacune plusieurs tâches, le processeur ayant accès par adressage à un espace adressable comprenant des mémoires de programme et de données, et des registres d'entrée et de sortie permettant au processeur de communiquer avec son environnement.

Selon l'invention, ce procédé est caractérisé en ce qu'il comprend :
- l'attribution d'un droit d'accès à chaque fonction à exécuter par le processeur,
- la division de l'espace adressable par le processeur en partitions adressables et l'association de chaque partition adressable à au droit d'accès d'une des fonctions, de manière à permettre à chaque fonction d'accéder à au moins une partition adressable,
- la division du temps d'utilisation du processeur en tranches de temps cycliques, et l'association de chaque tranche de temps au droit d'accès d'une des fonctions, de manière à ce que chaque fonction soit exécutée au cours d'au moins une tranche de temps,
- au début de chaque nouvelle tranche de temps, la vérification que le processeur a terminé l'exécution de la fonction précédente, et l'émission d'un signal d'erreur vers le processeur si l'exécution de la fonction précédente n'est pas terminée, la mise à jour d'un droit d'accès en cours correspondant au droit d'accès associé à la nouvelle tranche de temps, et l'activation des tâches de la fonction correspondante, et
- lors de chaque accès par le processeur à une partition adressable, la lecture du droit d'accès associé à la partition adressable accédée, la comparaison de ce droit d'accès avec le droit d'accès associé à la tranche de temps en cours, et l'émission d'un signal d'erreur vers le processeur dans le cas où la comparaison révèle une incohérence.

Ces dispositions permettent l'exécution d'une manière totalement indépendante de plusieurs fonctions par un seul processeur, et ainsi d'éviter à la fois qu'une erreur d'adressage commise par le processeur lors de l'exécution d'une fonction entraîne des modifications de zones mémoires attribuées à d'autres fonctions, et qu'une erreur d'exécution qui provoque un dépassement du temps attribué à la fonction perturbe l'exécution de la fonction suivante par le processeur. Les erreurs qui peuvent apparaître au cours d'une tranche de temps cyclique se trouvent donc strictement confinées à cette tranche de temps, et ainsi, ne peuvent pas perturber les fonctions exécutées au cours des tranches de temps suivantes.

De cette manière, il est possible de regrouper des fonctions de différents niveaux de criticité dans un même module comportant un seul processeur, sans que cela se traduise par une augmentation des risques de panne.

Il n'est donc plus nécessaire d'utiliser une architecture totalement doublée ou triplée, seules les fonctions les plus critiques étant doublées ou triplées. L'invention permet ainsi de réduire notablement le coût, l'encombrement et la puissance dissipée d'un tel équipement.

Par ailleurs, comme les pannes sont confinées à la seule fonction affectée, la maintenance de l'équipement, et en particulier les opérations de localisation de panne et de réparation, se trouve facilitée d'une manière importante.

Généralement, les fonctions exécutées pour le pilotage en temps réel d'un processus industriel comprennent plusieurs tâches qui sont exécutées périodiquement, chaque tâche ayant un niveau de criticité. Dans ce contexte, le procédé selon l'invention comprend en outre:
- la division des partitions de l'espace adressable en zones adressables, et l'association de droits d'accès à ces zones,
- l'attribution des droits d'accès des zones de chaque partition adressable aux tâches de la fonction correspondant à la partition adressable en fonction des niveaux de criticité respectifs des tâches,
- lors de l'activation de chaque tâche, la mise à jour d'un droit d'accès en cours, et
- lors de chaque accès à une zone adressable, la comparaison du droit d'accès associé à la zone adressable avec le droit d'accès de la tâche en cours d'exécution.

Avantageusement, le procédé selon l'invention comprend en outre l'attribution à chaque tâche de temps d'exécution minimum et maximum, le contrôle à la fin de l'exécution de chaque tâche que ces temps sont respectés, et l'émission d'un signal d'erreur vers le processeur lorsqu'ils ne sont pas respectés.

Cette disposition permet un contrôle plus précis de l'exécution des tâches par le processeur, et ainsi, une meilleure détection des erreurs.

Pour limiter davantage les conséquences des erreurs d'adressage, les zones de l'espace adressable par le processeur utilisables à chaque tranche de temps sont séparées par des zones non utilisées, ce qui permet d'éviter que certaines erreurs d'adressage entraînent des modifications erronées de la mémoire ou des accès en sortie erronés.

Selon une autre particularité de l'invention, les zones non utilisées des mémoires de programme et de données sont remplies avec du code exécutable par le processeur permettant l'arrêt ou le blocage de celui-ci, ce qui permet de provoquer un dépassement du temps maximum attribué à la tâche en cours d'exécution.

Un mode de réalisation du dispositif selon l'invention sera décrit ci-après, à titre d'exemple non limitatif, avec référence aux dessins annexés dans lesquels:
La figure 1 représente un équipement électronique embarqué à bord d'un aérodyne, rassemblant plusieurs modules ;
La figure 2 montre plus en détail l'unité de traitement d'un module ;
La figure 3 illustre le fonctionnement de l'unité de traitement selon l'invention;
La figure 4 représente l'organisation d'une partie de la mémoire d'une unité de traitement ;
La figure 5 représente le codage d'un droit d'accès stocké en mémoire ;
La figure 6 illustre la répartition de l'utilisation du processeur en tranches de temps cycliques.

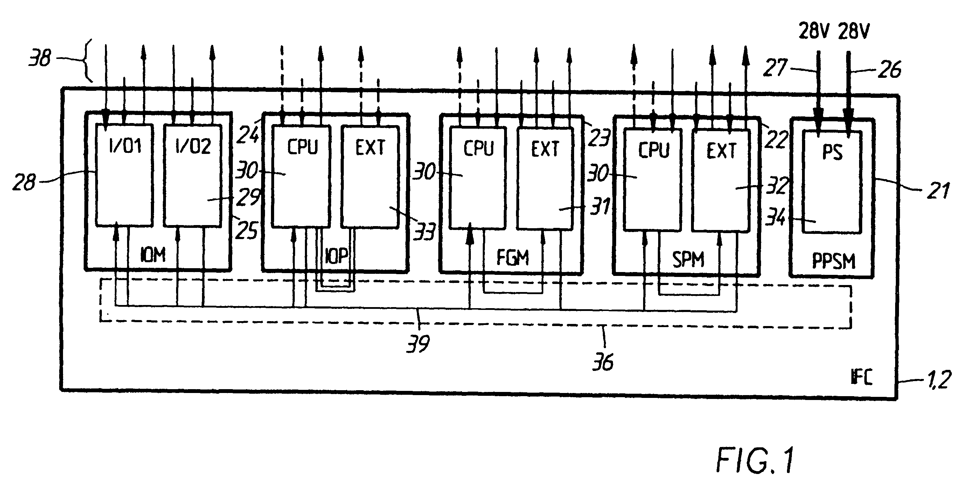

L'équipement électronique 1 représenté sur la figure 1, se présente sous la forme d'une baie électronique dans laquelle sont insérés et interconnectés une pluralité de modules 21 à 25, à savoir un module IOM 25 chargé de gérer les entrées et sorties de données analogiques et discrètes, non critiques, un module IOP 24 chargé de concentrer les données numériques non critiques, un module FGM 23 chargé du traitement des données critiques liées au pilotage automatique, un module SPM 22 chargé d'assurer la fonction de prévention des risques de décrochage, et un module d'alimentation primaire PPSM 21 qui regroupe les fonctions de pré-régulation des tensions primaires à 28 Volts fournies par deux lignes 26, 27 d'alimentation générale de l'aérodyne, les autres modules 22 à 25 comportant un circuit d'alimentation secondaire constitué de convertisseurs de tension de faible coût, assurant la production de tensions d'alimentations adaptées à leurs propres besoins.

Les autres modules 22 à 24, à l'exception du module de gestion 25 des données analogiques et discrètes, comprennent chacun une unité de traitement située sur une même carte à microprocesseur 30 et une carte d'extension spécifique 31 à 33, mais de structure voisine, assurant notamment les tâches d'entrée et sortie du module. Le module de gestion des données analogiques et discrètes 25 comprend également deux cartes 28, 29, mais celles-ci sont toutes les deux dédiées à la gestion des entrées et sorties et ne comportent pas de processeur.

Il est à noter que deux modules identiques dans plusieurs équipements, tels que 1, peuvent effectuer le même traitement en redondance ou des traitements complémentaires, selon la criticité des fonctions réalisées. Cette architecture offre donc de nombreuses possibilités d'adaptation et de configuration.

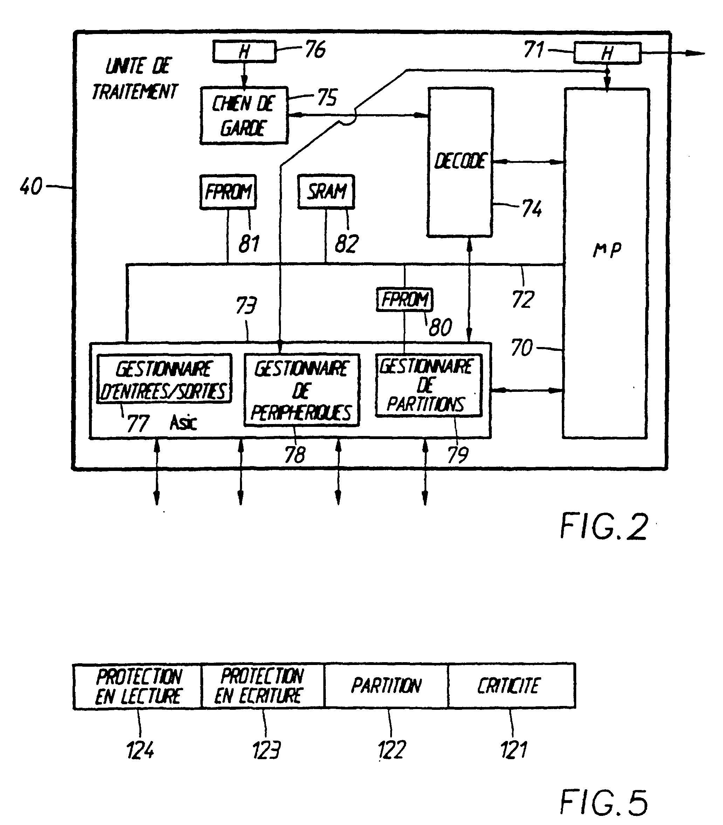

Sur la figure 2, l'unité de traitement 40 comprend un microprocesseur 70 cadencé par une horloge 71, et dont le fonctionnement est surveillé par un circuit "chien de garde" 75 qui est cadencé par une autre horloge 76. Le microprocesseur 70 est relié par l'intermédiaire d'un bus d'adresse et de données 72 à une mémoire programme de type non volatile 81, et à une mémoire de données de type volatile 82, ainsi qu'à un circuit ASIC 73. Les adresses d'accès fournies par le microprocesseur 70 sont traitées par un décodeur d'adresses 74 avant d'être envoyées sur le bus 72.

Les unités de traitement des modules 22 à 24 sont identiques. Toutefois, les fonctions exécutées par chacune de ces différentes cartes peuvent être de natures très différentes, de durées variables, et surtout, de niveaux de criticité très différents. Il est donc nécessaire de prendre des mesures particulières pour assurer la bonne exécution de ces fonctions qui comprennent plusieurs tâches.
Ainsi, par exemple, le module IOP 24 assure les fonctions suivantes :
- la concentration dans l'ensemble de traitement 1, 2, des données non critiques provenant des différents systèmes de l'aérodyne, à destination, en particulier, du système d'instrumentation électronique de la planche de bord,
- l'élaboration des paramètres et des logiques de contrôle issus et à destination de fonctions redondantes,
- la collecte et la mise en forme des données destinées à l'enregistreur de vol,
- la génération des alarmes destinées à l'équipage et l'activation de dispositifs d'alerte visuelle et sonore,
- la communication avec d'autres équipements, tels que le système avertisseur de la proximité du sol (GPWS), et
- le test du système et la localisation d'avaries, cette dernière tâche ayant un degré de criticité moindre que les autres.

Afin d'interdire qu'une fonction en perturbe une autre, et en particulier, qu'une fonction moins critique bloque l'exécution d'une fonction plus critique, le circuit ASIC 73 comprend :
- un circuit de gestion 77 des entrées / sorties de l'unité de traitement 40, qui peuvent être de type numérique ARINC 429, discrètes, ou série,
- un circuit de gestion de périphériques 78 comprenant des moyens de transfert rapide (DMA) de données entre zones adressables par le microprocesseur 70, et des moyens de comptage de temps et de génération d'interruptions cycliques en direction du microprocesseur 70, pour délimiter des tranches de temps cycliques, et
- un circuit de contrôle 79 des accès à l'espace adressable par le microprocesseur 70 en fonction de droits d'accès affectés aux différentes tâches exécutées par celui-ci, ces droits d'accès étant stockés dans une autre mémoire non volatile 80 adressée par le bus 72 et dont le port de données et relié au circuit ASIC 73.

Le circuit de contrôle des accès 79 comprend des moyens 79 pour effectuer le contrôle des plans d'adressage de l'espace adressable par le microprocesseur 70, cet espace comprenant les mémoires 81, 82 et des registres d'entrée et de sortie accessibles par le circuit de gestion des entrées/sorties 77,

Par ailleurs, la mémoire 80 est connectée aux bits de poids forts du bus d'adresse, ce qui permet d'associer des droits d'accès stockés dans la mémoire à chaque ensemble, par exemple de 512 octets, de l'espace adressable par le microprocesseur.

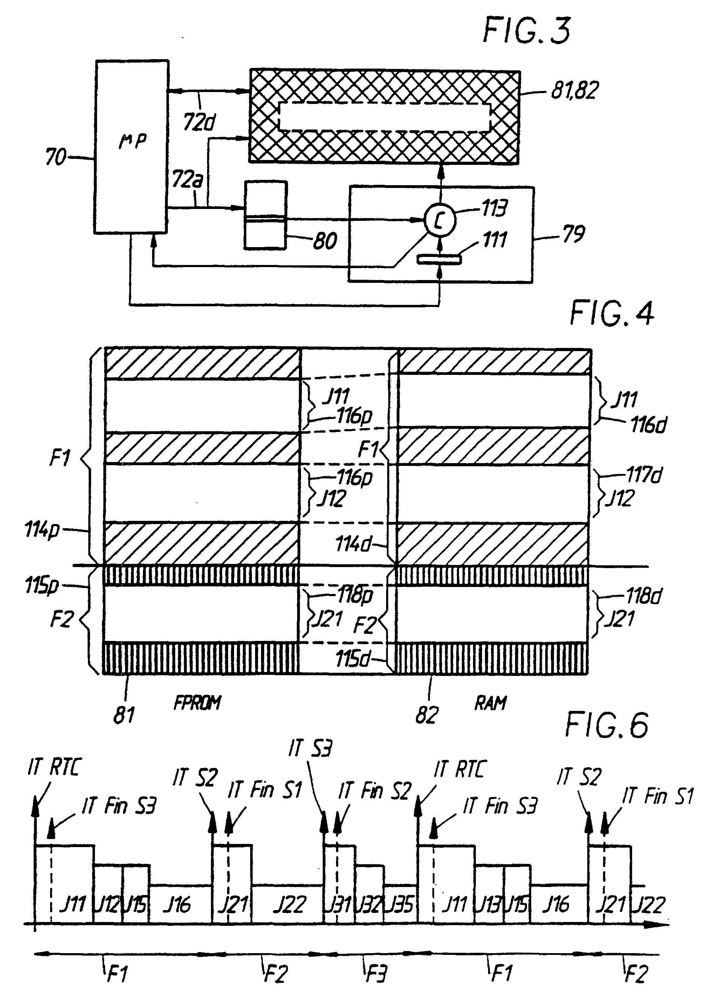

Tel que représenté sur la figure 3, le circuit de contrôle 79 des accès à l'espace adressable par le microprocesseur 70 comprennent un registre 111 contenant le droit d'accès autorisé correspondant à la tranche de temps cyclique en cours, mis à jour par le microprocesseur 70 au début de chaque nouvelle tranche de temps, marqué par une interruption. Ce circuit est connecté au bus de données de la mémoire non volatile 80 qui contient les droits d'accès de chaque zone de l'espace adressable par le microprocesseur 70.

Sur la figure 4, la mémoire contenant les programmes 81 et la mémoire contenant les données 82 sont divisées en partitions 114p, 115p, 114d, 115d, attribuées respectivement à deux fonctions distinctes F1, F2, les partitions 114p et 115p contenant respectivement le programme exécutable par le microprocesseur 70 permettant la réalisation des fonctions F1, F2, et les partitions 114d et 115d les données utilisées exclusivement, respectivement par F1, F2. Comme chaque fonction comprend plusieurs tâches J11, J12, J21, les partitions 114p, 115p, 114d, 115d sont à leur tour divisées en plusieurs zones 116p, 117p, 118p, 116d, 117d, 118d, chaque zone mémoire contenant le programme, ou selon le cas, étant utilisable pour stocker des données, par une tâche Jij de la fonction Fi correspondante.

Ainsi, l'espace adressable par le microprocesseur est structuré en partitions et en zones à l'intérieur d'une même partition, chaque zone étant associée à un droit d'accès.

Avantageusement, les zones de mémoire utilisables par chaque tâche cyclique sont séparées les unes des autres par des zones de mémoire non utilisées (zones hachurées montrées sur la figure 4), ce qui permet de rendre sans effet pour les autres fonctions certaines erreurs d'adressage.

Lorsque le microprocesseur 70 effectue un accès à une des mémoires 81, 82, à une adresse donnée, celle-ci est envoyée sur le bus d'adresse 72a à la fois vers la zone mémoire adressée dans l'espace adressable du microprocesseur 70, et vers la mémoire 80 qui fournit alors les droits d'accès de la zone adressée au service de contrôle 79. Le service de contrôle 79 comprend un comparateur 113 qui compare les droits d'accès provenant du registre 111 avec les droits d'accès lus dans la mémoire 80.
Si le comparateur détecte une différence, il interdit au microprocesseur 70 d'accéder à la zone mémoire adressée lorsqu'il s'agit d'un accès en écriture, et génère une interruption de violation d'accès à la mémoire, à destination du microprocesseur 70. Lorsqu'il s'agit d'un accès en lecture, il signale simplement que la lecture a été effectuée dans une zone interdite. Si les droits d'accès lus dans la mémoire 80 et ceux stockés dans le registre 111 coïncident, les données peuvent être échangées sur le bus de données 72d entre le microprocesseur et la zone mémoire.

Sur la figure 5, les mots de droit d'accès stockés dans la mémoire 80 peuvent comprendre chacun quatre champs, à savoir un champ 121 correspondant à un niveau de criticité, un champ 122 correspondant à un numéro de partition, un champ de protection en écriture 123, et un champ de protection en lecture 124.

Selon une variante de l'invention, le comparateur 113 peut autoriser en outre l'accès à une zone correspondant à la même fonction que celle de la tranche de temps en cours, et dont le niveau de droit d'accès est inférieur à celui de la tâche en cours, ceci afin d'instaurer une hiérarchie dans les droits d'accès lors de l'exécution des tâches d'une fonction.

Cette détection d'erreurs d'adressage permet de neutraliser les fautes en empêchant toute modification erronée de la mémoire ou accès erroné à un registre de sortie, et de stopper l'exécution de la tâche ou de la fonction en faute, en fonction de la gravité de la faute. De cette manière, on évite toute propagation de la faute aux autres fonctions exécutées par le microprocesseur, et aux autres parties de l'espace adressable.

D'après la figure 6, le procédé selon l'invention permet d'exécuter séparément par un même processeur plusieurs fonctions comprenant chacune plusieurs tâches, le temps d'utilisation du microprocesseur 70 étant divisé en périodes par une interruption IT RTC cyclique produite par une horloge temps réelle du circuit de gestion de périphériques 78, l'intervalle de temps entre deux interruptions IT RTC étant lui-même divisé en autant de tranches de temps que de fonctions F1, F2, F3 exécutées par le microprocesseur, par des interruptions ITS2, ITS3 espacées les unes des autres en fonction du temps que l'on souhaite attribuer à chaque fonction F1, F2, F3, ces interruptions étant également produites par le circuit de gestion 78.

La fonction F1 comprend six tâches J11 à J16, la tâche J11 étant exécutée à chaque interruption IT RTC marquant le début de la partition attribuée à F1, les tâches J12, J13 et J14 (non représentée) étant exécutées en alternance à la suite de la tâche I11, la tâche J15 étant exécutée à chaque partition attribuée à F1 à la suite de l'une des tâches J12, J13, J14, la tâche J16 étant exécutée en tâche de fond dans le temps restant de la partition attribuée à F1. De même, la fonction F2 comprend deux tâches J21 et J22, la tâche J21 étant exécutée à chaque interruption ITS2 marquant le début de la partition attribuée à F2, et la tâche J22 étant exécutée en tâche de fond dans le temps restant de la partition attribuée à F2. La fonction F3 comprend 5 tâches, à savoir la tâche J31 exécutée à la suite de chaque interruption ITS3, la tâche J32, et les tâches J33 et J34 (non représentées), exécutées en alternance à la suite de la tâche J31, et la tâche J35 exécutée en tâche de fond dans le temps restant dans la partition attribuée à F3.

Les interruptions IT RTC, ITS2 et ITS3 sont masquables, c'est-à-dire qu'elles sont reportées dans le cas où le microprocesseur exécute une séquence de code qui ne doit pas être interrompue. Pour éviter qu'une erreur se produisant durant une telle séquence de code ne perturbe l'exécution des autres fonctions, une interruption non masquable IT FinS3, IT FinS1, IT FinS2, est générée par le circuit de gestion des périphériques 78 juste après la fin normale de la tranche de temps correspondante, cette interruption étant systématiquement désactivée par le microprocesseur 70 à la fin de l'exécution de toutes les tâches de chaque cycle.

De cette manière, en fonctionnement normal, cette interruption n'apparaît pas, mais si l'exécution d'une fonction F1, F2, F3 pour un cycle donné dépasse la durée du cycle, cette interruption apparaît, ce qui permet d'éviter dans ce cas que l'activation de la fonction au cycle suivant soit retardée.

Le microprocesseur 70 a accès à une table stockée en mémoire 81 décrivant l'ordonnancement des tâches à chaque cycle délimité par les interruptions IT RTC, ITS2 et ITS3, et les droits d'accès attribués à chaque tâche. Au lancement de la chaque tâche, le microprocesseur met à jour le registre 111 avec le droit d'accès attribué à la tâche dans cette table.
Par ailleurs, on peut prévoir d'attribuer dans cette table, un temps minimum et un temps maximum à l'exécution de chaque tâche. Le processeur peut alors accéder à un compteur de temps compris dans le circuit de gestion des périphériques 78 au début et à la fin de chaque tâche et contrôler que le temps d'exécution ainsi mesuré se situe entre les temps minimum et maximum. Si cela n'est pas le cas, il appelle alors un gestionnaire d'erreur logiciel pour prendre en compte l'erreur et éventuellement stopper l'exécution ultérieure de la tâche ou de la fonction concernée de manière à neutraliser les effets de l'erreur.

Afin d'augmenter encore la sécurité de fonctionnement apportée par la structuration de l'espace adressable par le microprocesseur, les zones non utilisées des mémoires 81, 82 peuvent être remplies avec du code exécutable par le microprocesseur 70 qui, s'il venait à être exécuté par le microprocesseur, provoquerait par exemple son arrêt ou son blocage, et ainsi, un dépassement du temps maximum attribué à la tâche.

## Revendications

1. Procédé pour l'exécution par un processeur (70) unique de plusieurs fonctions regroupant chacune plusieurs tâches, le processeur ayant accès par adressage à un espace adressable comprenant des mémoires de programme (81) et de données (82), et des registres (77) d'entrée et de sortie permettant au processeur de communiquer avec son environnement,
**caractérisé en ce qu'**il comprend :
- l'attribution d'un droit d'accès à chaque fonction (F1, F2) à exécuter par le processeur (70),
- la division de l'espace adressable par le processeur en partitions adressables et l'association de chaque partition adressable au droit d'accès d'une des fonctions, de manière à permettre à chaque fonction d'accéder à au moins une partition adressable,
- la division du temps d'utilisation du processeur en tranches de temps cycliques, et l'association de chaque tranche de temps cyclique au droit d'accès d'une des fonctions, de manière à ce que chaque fonction soit exécutée au cours d'au moins une tranche de temps,
- au début de chaque nouvelle tranche de temps, la vérification que le processeur a terminé l'exécution de la fonction précédente, et l'émission d'un signal d'erreur vers le processeur si l'exécution de la fonction précédente n'est pas terminée, la mise à jour d'un droit d'accès en cours correspondant au droit d'accès associé à la nouvelle tranche de temps, et l'activation des tâches de la fonction correspondante, et
- lors de chaque accès par le processeur (70) à une partition adressable, la lecture du droit d'accès associé à la partition accédée, la comparaison de ce droit d'accès avec le droit d'accès associé à la tranche de temps en cours, et l'émission d'un signal d'erreur vers le processeur dans le cas où la comparaison révèle une incohérence.

2. Procédé selon la revendication 1,
**caractérisé en ce que** les fonctions sont exécutées périodiquement, chaque tâche ayant un niveau de criticité, le procédé comprenant en outre :
- la division des partitions de l'espace adressable en zones adressables, et l'association de droits d'accès à ces zones,
- l'attribution des droits d'accès des zones de chaque partition adressable aux tâches de la fonction correspondant à la partition adressable en fonction des niveaux de criticité respectifs des tâches,
- lors de l'activation de chaque tâche, la mise à jour d'un droit d'accès en cours, et
- lors de chaque accès à une zone adressable, la comparaison du droit d'accès associé à la zone adressable avec le droit d'accès de la tâche en cours d'exécution.

3. Procédé selon la revendication 1 ou 2,
**caractérisé en ce qu'**il comprend en outre l'attribution à chaque tâche d'un temps d'exécution minimum et maximum, le contrôle à la fin de l'exécution de la tâche que la durée d'exécution de la tâche est comprise entre ces temps minimum et maximum, et l'émission d'un signal d'erreur si cette condition n'est pas remplie.

4. Procédé selon la revendication 1 ou 2,
**caractérisé en ce que** les zones de l'espace adressable par le processeur (70) utilisables à chaque tranche de temps sont séparées par des zones non utilisées.

5. Procédé selon la revendication 4,
**caractérisé en ce que** les zones non utilisées des mémoires de programme (81) et de données (82) sont remplies avec du code exécutable par le processeur (70) permettant l'arrêt ou le blocage de celui-ci, ce qui permet de provoquer un dépassement du temps maximum attribué à la tâche en cours d'exécution.

6. Procédé selon l'une des revendications précédentes,
**caractérisé en ce que** l'accès par le processeur (70) à une zone de l'espace adressable est autorisé si le droit d'accès de la tâche en cours est supérieur au droit d'accès de la zone adressable, pour la même tranche de temps cyclique.

7. Procédé selon l'une des revendications précédentes,
**caractérisé en ce que** le droit d'accès associé à chaque tâche contient un champ d'autorisation d'accès en lecture et un champ d'autorisation d'accès en écriture, le procédé comprenant en outre l'interdiction d'accéder à une zone mémoire en cas de violation d'accès en écriture, et le signalement des accès en lecture interdits.

8. Dispositif pour la mise en oeuvre du procédé selon l'une des revendications précédentes,
**caractérisé en ce qu'**il comprend :
- des moyens (79) pour diviser l'espace adressable par le microprocesseur en partitions adressables et en zones adressable, et pour attribuer à chaque fonction et chaque tâche exécutée par le microprocesseur, respectivement au moins une partition adressable et au moins une zone adressable,
- des moyens (79) pour diviser le temps d'utilisation du processeur en tranches de temps cycliques, et pour attribuer ces tranches de temps respectivement à l'exécution de chacune des fonctions,
- des moyens pour activer successivement dans un ordre prédéfini les tâches de chaque fonction pendant les tranches de temps attribuées à la fonction,
- des moyens pour mettre à jour et stocker (111) les droits d'accès correspondant à la tâche en cours d'exécution, et des moyens (113) pour contrôler lors de chaque accès à une zone adressable que les droits d'accès attribués à la tâche en cours correspondent à ceux de la zone adressée.

9. Dispositif selon la revendication 8,
**caractérisé en ce qu'**il comprend en outre des moyens pour contrôler que le temps d'exécution de chaque tâche respecte une durée minimum et une durée maximum, associées de la tâche, et l'émission d'un signal d'erreur lorsque ces durées ne sont pas respectées.

10. Dispositif selon la revendication 8 ou 9,
**caractérisé en ce qu'**il comprend en outre des moyens (79) pour effectuer le contrôle des plans d'adressage de l'espace adressable par le microprocesseur (70), cet espace comprenant les mémoires (81, 82) et des registres d'entrée et de sortie,

11. Dispositif selon l'une des revendications 8 à 10,
**caractérisé en ce que** les tranches de temps sont délimitées par des interruptions appliquées au processeur, qui peuvent être retardées lorsque le processeur exécute une séquence de programme non interruptible.

12. Dispositif selon la revendication 11,
**caractérisé en ce qu'**il comprend des moyens pour générer une interruption non masquable par une séquence de programme non interruptible, juste après le début d'une tranche de temps cyclique dans le cas où, à cet instant, l'exécution de la fonction au cours de la tranche de temps précédente ne s'est pas terminée, et l'émission d'un signal d'erreur pour signaler que l'exécution de cette fonction est erronée.

## Patentansprüche

1. Verfahren zur Ausführung mehrerer Funktionen, die je mehrere Aufgaben zusammenfassen, durch einen gemeinsamen Prozessor (70), der über die Adressierung Zugang zu einem adressierbaren Speicherraum hat, welcher Programmspeicher (81), Datenspeicher (82) und Eingangs- und Ausgangsregister (77) enthält, über die der Prozessor mit seinem Umfeld kommunizieren kann, **dadurch gekennzeichnet, daß** es aufweist:
- die Zuweisung einer Zugangsberechtigung zu jeder Funktion (F1, F2), die der Prozessor (70) ausführen soll,
- die Unterteilung des vom Prozessor adressierbaren Speicherraums in adressierbare Abschnitte und die Zuordnung jedes adressierbaren Abschnitts zur Zugangsberechtigung einer der Funktionen, sodaß jede Funktion zu mindestens einem adressierbaren Abschnitt Zugang bekommt,
- die Unterteilung der Rechenzeit des Prozessors in zyklische Zeitabschnitte und die Zuordnung jedes zyklischen Zeitabschnitts zur Zugangsberechtigung einer der Funktionen, sodaß jede Funktion während mindestens eines Zeitabschnitts ausgeführt wird,
- die Überprüfung zu Beginn jedes neuen Zeitabschnitts, ob der Prozessor die vorausgegangene Funktion zuendegeführt hat, und die Übersendung eines Fehlersignals an den Prozessor, wenn die Ausführung der vorausgegangenen Funktion nicht zuendegeführt wurde, die Aktualisierung einer gerade laufenden Zugangsberechtigung entsprechend der Zugangsberechtigung, die dem neuen Zeitabschnitt zugeordnet ist, und die Aktivierung der Aufgaben der entsprechenden Funktion,
- und bei jedem Zugriff des Prozessors (70) zu einem adressierbaren Abschnitt das Auslesen der diesem Abschnitt zugeordneten Zugangsberechtigung, den Vergleich dieser Zugangsberechtigung mit der Zugangsberechtigung, die dem gerade laufenden Zeitabschnitt zugewiesen ist, und die Aussendung eines Fehlersignals an den Prozessor, wenn der Vergleich eine Inkohärenz ergibt.

2. Verfahren nach Anspruch 1, **dadurch gekennzeichnet, daß** die Funktionen periodisch durchgeführt werden, wobei jede Aufgabe ein Kritikalitätsniveau besitzt und das Verfahren außerdem aufweist:
- die Unterteilung der Abschnitte des adressierbaren Speicherraums in adressierbare Zonen und die Zuordnung von Zugangsberechtigungen zu diesen Zonen,
- die Zuordnung der Zugangsberechtigung der Zonen jedes adressierbaren Abschnitts zu den Aufgaben der Funktion entsprechend dem adressierbaren Abschnitt abhängig vom jeweiligen Kritikalitätsniveau der Aufgaben,
- die Aktualisierung einer gerade laufenden Zugangsberechtigung bei der Aktualisierung jeder Aufgabe,
- und den Vergleich der der adressierbaren Zone zugeordneten Zugangsberechtigung mit der Zugangsberechtigung der gerade in Ausführung befindlichen Aufgabe bei jedem Zugang zu einer adressierbaren Zone.

3. Verfahren nach Anspruch 1 oder 2, **dadurch gekennzeichnet, daß** es außerdem die Zuordnung einer Mindest-Ausführungsdauer und einer Höchst-Ausführungsdauer zu jeder Aufgabe, die Kontrolle am Ende der Ausführung jeder Aufgabe, ob die Ausführungsdauer jeder Aufgabe zwischen der Mindestund der Höchst-Ausführungsdauer liegt, und die Aussendung eines Fehlersignals, wenn diese Bedingung nicht erfüllt ist.

4. Verfahren nach Anspruch 1 oder 2, **dadurch gekennzeichnet, daß** die Zonen des durch den Prozessor (70) adressierbaren Raums, die in jedem Zeitabschnitt nutzbar sind, durch nicht genutzte Zonen voneinander getrennt sind.

5. Verfahren nach Anspruch 4, **dadurch gekennzeichnet, daß** die nicht genutzten Zonen der Programmspeicher (81) und Datenspeicher (82) mit einem Kode gefüllt sind, der vom Prozessor (70) ausgeführt werden kann und das Anhalten oder Blockieren des Prozessors erlaubt, wodurch es möglich ist, eine Überschreitung der Maximalzeit zu provozieren, die der gerade auszuführenden Aufgabe zugeordnet ist.

6. Verfahren nach einem der vorstehenden Ansprüche, **dadurch gekennzeichnet, daß** der Zugang des Prozessors (70) zu einer adressierbaren Speicherzone freigegeben wird, wenn für den gleichen zyklischen Zeitabschnitt die Zugangsberechtigung der in Ausführung befindlichen Aufgabe höher als die Zugangsberechtigung der adressierbaren Zone ist.

7. Verfahren nach einem der vorstehenden Ansprüche, **dadurch gekennzeichnet, daß** die jeder Aufgabe zugeordnete Zugangsberechtigung ein Feld zur Freigabe des Zugangs in Leserichtung und ein Feld zur Freigabe des Zugangs in Schreibrichtung enthält, wobei das Verfahren außerdem das Verbot des Zugangs zu einer Speicherzone im Fall der Verletzung des Zugangs in Schreibrichtung und die Signalisierung der verbotenen Zugänge in Leserichtung enthält.

8. Vorrichtung zur Durchführung des Verfahrens nach einem der vorstehenden Ansprüche, **dadurch gekennzeichnet, daß** es enthält:
- Mittel (79) zur Unterteilung des durch den Mikroprozessor adressierbaren Speicherraums in adressierbare Abschnitte und in adressierbare Zonen und zur Zuordnung mindestens eines adressierbaren Abschnitts beziehungsweise mindestens einer adressierbaren Zone zu jeder Funktion beziehungsweise Aufgabe, die vom Mikroprozessor durchgeführt wird,
- Mittel (79), um die Rechenzeit des Prozessors in zyklische Zeitabschnitte zu unterteilen und um diese Zeitabschnitte der Ausführung je einer der Funktionen zuzuweisen,
- Mittel zur aufeinanderfolgenden Aktivierung der Aufgaben jeder Funktion in einer vordefinierten Reihenfolge während der der Funktion zugeordneten Zeitabschnitte,
- Mittel (111) zur Aktualisierung und Speicherung der Zugangsberechtigungen entsprechend der gerade in Ausführung befindlichen Aufgabe sowie Mittel (113) zur Kontrolle bei jedem Zugang zu einer adressierbaren Zone, ob die der gerade in Ausführung befindlichen Aufgabe zugewiesenen Zugangsberechtigungen denen der adressierten Zone entsprechen.

9. Vorrichtung nach Anspruch 8, **dadurch gekennzeichnet, daß** sie außerdem Mittel enthält, um zu kontrollieren, ob die Zeit zur Ausführung jeder Aufgabe eine Mindest-Zeitdauer und eine Höchst-Zeitdauer einhält, die der Aufgabe zugewiesen sind, und die Aussendung eines Fehlersignals, wenn diese Grenzen nicht eingehalten werden.

10. Vorrichtung nach Anspruch 8 oder 9, **dadurch gekennzeichnet, daß** sie außerdem Mittel (79) aufweist, um die Kontrolle der Pläne zur Adressierung des vom Mikroprozessors (70) adressierbaren Speicherraums aufweist, der Speicher (81, 82) und Eingangs- und Ausgangsregister enthält.

11. Vorrichtung nach einem der Ansprüche 8 bis 10, **dadurch gekennzeichnet, daß** die Zeitabschnitte durch Unterbrechungen begrenzt werden, die an den Prozessor angelegt werden und verzögert werden können, wenn der Prozessor eine Programmfolge ausführt, die nicht unterbrochen werden soll.

12. Vorrichtung nach Anspruch 11, **dadurch gekennzeichnet, daß** sie Mittel enthält, um eine nicht durch eine nicht unterbrechbare Programmfolge überdeckbare Unterbrechung unmittelbar nach dem Beginn eines zyklischen Zeitabschnitts zu erzeugen, wenn in diesem Zeitpunkt die Ausführung der gerade laufenden Funktion des vorhergehenden Zeitabschnitts noch nicht beendet war, und die Aussendung eines Fehlersignals, das anzeigt, daß die Ausführung dieser Funktion fehlerhaft ist.

## Claims

1. Method for the execution by a single processor (70) of several functions each grouping together several tasks, the processor having addressing access to an addressable space comprising memories for a program (81) and for data (82), and input and output registers (77) allowing the processor to communicate with its environment,
**characterized in that** it comprises:
- the allocating of a right of access to each function (F1, F2) to be executed by the processor (70),
- the dividing of the space addressable by the processor into addressable partitions and the associating of each addressable partition with the access right of one of the functions, in such a way as to allow each function to access at least one addressable partition,
- the dividing of the time of use of the processor into cyclic time slices, and the associating of each cyclic time slice with the access right of one of the functions, in such a way that each function is executed in the course of at least one time slice,
- at the start of each new time slice, the confirming that the processor has terminated the execution of the previous function, and the transmitting of an error signal to the processor if the execution of the previous function has not terminated, the updating of a current access right corresponding to the access right associated with the new time slice, and the activating of the tasks of the corresponding function, and
- during each access by the processor (70) to an addressable partition, the reading of the access right associated with the accessed partition, the comparing of this access right with the access right associated with the current time slice, and the transmitting of an error signal to the processor in the case in which the comparison reveals an inconsistency.

2. Method according to Claim 1,
**characterized in that** the functions are executed periodically, each task having a level of criticality, the method furthermore comprising:
- the dividing of the partitions of the addressable space into addressable areas, and the associating of access rights with these areas,
- the allocating of the access rights of the areas of each addressable partition to the tasks of the function corresponding to the addressable partition as a function of the respective levels of criticality of the tasks,
- during the activating of each task, the updating of a current access right, and
- during each access to an addressable area, the comparing of the access right associated with the addressable area, with the access right of the task currently being executed.

3. Method according to Claim 1 or 2,
**characterized in that** it furthermore comprises the allocating to each task of a minimum and maximum execution time, the checking at the end of the execution of the task that the duration of execution of the task lies between these minimum and maximum times, and the transmitting of an error signal if this condition is not fulfilled.

4. Method according to Claim 1 or 2,
**characterized in that** the areas of the space addressable by the processor (70), which can be used at each time slice are separated by unused areas.

5. Method according to Claim 4,
**characterized in that** the unused areas of the memories for a program (81) and for data (82) are filled with code executable by the processor (70) making it possible to stop or shut down the latter, thereby making it possible to cause the exceeding of the maximum time allocated to the task currently being executed.

6. Method according to one of the preceding claims,
**characterized in that** the access by the processor (70) to an area of the addressable space is authorized if the access right of the current task is higher than the access right of the addressable area, for the same cyclic time slice.

7. Method according to one of the preceding claims,
**characterized in that** the access right associated with each task contains a read-access authorization field and a write-access authorization field, the method furthermore comprising the barring of access to a memory area in the case of write-access violation, and the signalling of the barred read-accesses.

8. Device in respect of the implementing of the method according to one of the preceding claims,
**characterized in that** it comprises:
- means (79) for dividing the space addressable by the microprocessor into addressable partitions and into addressable areas, and for allocating at least one addressable partition and at least one addressable area respectively to each function and each task executed by the microprocessor,
- means (79) for dividing the time of use of the processor into cyclic time slices, and for allocating these time slices respectively to the execution of each of the functions,
- means for activating in succession in a predefined order the tasks of each function during the time slices allocated to the function,
- means for updating and storing (111) the access rights corresponding to the task currently being executed, and means (113) for checking during each access to an addressable area that the access rights allocated to the current task correspond to those of the addressed area.

9. Device according to Claim 8,
**characterized in that** it furthermore comprises means for checking that the execution time of each task complies with an associated minimum duration and an associated maximum duration of the task, and the transmitting of an error signal when these durations are not complied with.

10. Device according to Claim 8 or 9,
**characterized in that** it furthermore comprises means (79) for checking the addressing planes of the space addressable by the microprocessor (70), this space comprising the memories (81, 82) and input and output registers.

11. Device according to one of Claims 8 to 10,
**characterized in that** the time slices are delimited by interrupts applied to the processor, which may be delayed when the processor is executing an uninterruptable program sequence.

12. Device according to Claim 11,
**characterized in that** it comprises means for generating an interrupt which is nonmaskable by an uninterruptable program sequence, just after the start of a cyclic time slice in the case where, at this instant, the execution of the function in the course of the previous time slice has not terminated, and the transmitting of an error signal so as to signal that the execution of this function is erroneous.
